(19) **Europäisches Patentamt
European Patent Office
Office européen des brevets**

(11) **EP 3 958 218 B1**

(12) **EUROPEAN PATENT SPECIFICATION**

(45) Date of publication and mention
of the grant of the patent:
**10.09.2025 Bulletin 2025/37**

(21) Application number: **21188368.1**

(22) Date of filing: **29.07.2021**

(51) International Patent Classification (IPC):
*G06V 10/10* (2022.01)    *G06V 10/12* (2022.01)
*G06V 10/46* (2022.01)    *G06V 10/50* (2022.01)
*G06V 10/764* (2022.01)    *G06V 20/60* (2022.01)
*G06V 20/64* (2022.01)

(52) Cooperative Patent Classification (CPC):
**G06V 10/17; G06V 10/12; G06V 10/462;
G06V 10/507; G06V 10/764; G06V 20/64**

(54) **OBJECT IDENTIFICATION METHOD AND DEVICE THEREOF**

VERFAHREN ZUR OBJEKTIDENTIFIKATION UND VORRICHTUNG DAFÜR

PROCÉDÉ D'IDENTIFICATION D'OBJET ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2020 CN 202010835129**

(43) Date of publication of application:
**23.02.2022 Bulletin 2022/08**

(73) Proprietor: **Robert Bosch GmbH
70442 Stuttgart (DE)**

(72) Inventors:
• **XIE, Robert**
**Shanghai 200335 (CN)**
• **GAO, Yu**
**Shanghai 200335 (CN)**
• **YANG, Wanlin**
**Shanghai 200335 (CN)**

(56) References cited:
**US-A1- 2018 373 959    US-B1- 9 171 195**

## Description

### TECHNICAL FIELD

The present invention relates to a method of using an electronic device to achieve target verification, and, more particularly, to a method of using an electronic device to achieve target verification based on the surface texture of a target.

### BACKGROUND TECHNOLOGY

US 2018/0373959 A1 describes methods for object recognition and related arrangements. Currently, image recognition technology is commonly used to recognize and verify different objects or targets, e.g., face recognition. Since there are significant differences between the faces of different people from, e.g., a 2D/3D profile perspective, macroscopic or 3D imaging and analysis technology can be used to achieve face recognition. In some applications, however, the objects to be distinguished are very close in appearance, e.g., a batch of products of the same model like computer keyboards. Because their macroscopic features are basically the same, the recognition and verification of every object can be achieved by analysing their microscopic features such as texture features. However, the extracted texture features are highly random due to such factors as changes in ambient light, thus causing a problem for achieving target verification.

### SUMMARY OF THE INVENTION

The present invention provides improved target verification technology which uses a light source with a fixed illumination intensity as the dominant light to shine on the target surface to ensure the stability of the ambient light while ensuring that the light source and the image sensor always remain relatively fixed, so that any obtained image truly reflects the scattering features of the target surface texture to light and achieves the true reflection of the features of the surface texture. Therefore, target verification is achieved based on texture features.

The present invention provides a method of using an electronic device to achieve target verification, according to claim 1.

The present invention provides an electronic device according to claim 16.

### BRIEF DESCRIPTION OF THE FIGURES

FIG. 1 schematically shows the target imaging shooting process.

FIG. 2 is a flow chart of a target registration method according to an embodiment of the present invention.

FIG. 3 is a flow chart of a target registration method according to another embodiment of the present invention.

FIG. 4 is a flow chart of a target verification method according to an embodiment of the present invention.

FIG. 5 is a flow chart of a target verification method according to another embodiment of the present invention.

### PARTICULAR EMBODIMENTS

A clear and complete description of the technical solution in some embodiments of the present invention will be provided below in conjunction with the figures of the embodiments of the present invention. Obviously, the embodiments described are only used to describe the present invention rather than to restrict it.

To achieve the verification of a target such as a product, it is necessary to extract target features and determine a unique representation of these features so as to verify the target based on these features. Overall consideration is given to macroscopic and microscopic feature attributes of the target surface according to embodiments of the present invention. In this embodiment, macroscopic features may be feature areas or feature point information on the target surface. Feature points or feature areas are position coordinates within the target image and feature description vectors; microscopic features may be surface texture features.

According to the present invention, when the texture features of the target surface are read, a light source with a constant light intensity is used to shine on the target surface while an image sensor is used to perform shooting. To accurately reflect these texture features and avoid interference due to any change of the light source relative to the image sensor, the light source must maintain a fixed relative position relation with the image sensor according to embodiments of the present invention, for example, fixed in an electronic device, such as a flash and an image sensor used in a mobile phone, wherein the flash is on throughout the capture of the target image, thus ensuring that the auxiliary light from the flash is used as the dominant light for image capture.

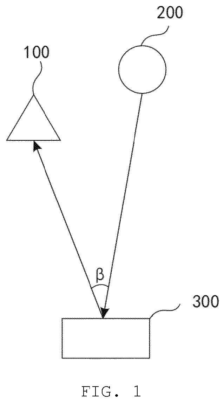

FIG. 1 schematically shows a diagram of shooting the surface of a target 300 using a flash and an image sensor located inside a mobile phone, with the triangular symbol 100 representing the image sensor and the circular symbol 200 representing the flash. The flash 200 and the sensor 100 have a fixed position and orientation because they are fixed inside the frame of the mobile phone. For example, the incident light emitted by the flash 200 onto the surface of the target 300 maintains a relatively fixed angle β with the reflected light reflected to the image sensor 100 from the target surface, as shown in Figure 1. However, the angle β between the incident light and the reflected light may vary between different electronic devices such as different mobile phones, but it is usually not greater than 5 degrees. Therefore, the use of the light source and the image sensor with a fixed relative position relation avoids the effect on the scattering features of the texture caused by the difference in the angle and other changing positions between the image sensor and the light source, thus possibly interfering with the accurate reflection of the surface features of the texture.

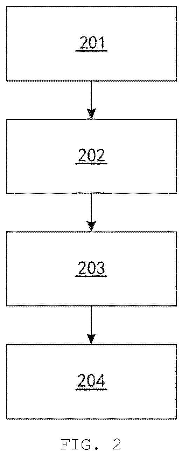

To achieve the verification of a target such as a product, the authentication information of the target is first pre-registered at a verification centre such as a server according to embodiments of the present invention. FIG. 2 exemplarily shows a flow chart of a target registration method for target verification, and the description uses a keyboard as an example.

In Step 201, the keyboard is still kept, the mobile phone flash 200 is turned on, and an image frame P of the keyboard is shot by using the image sensor 100, as shown in FIG. 2.

In Step 202, a plurality of feature points or at least one feature zone defined by the plurality of feature points in the image P are extracted. Visual feature extraction algorithms commonly used in the prior art such as the ORB (Oriented FAST and Rotated BRIEF) algorithm and the Scale Invariant Feature Transformation (SIFT) algorithm can be used here. For example, for the SIFT algorithm, it determines a plurality of feature points by detecting and describing local features in the image such as corners or bright points in dark areas. As an embodiment, M feature points can be extracted around, for example, the shift key on the right of the keyboard, including the position coordinates [x, y] and description vectors DV of the feature points, hereafter denoted as $(L_1, DV_1)$, $(L_2, DV_2)$, ..., $(L_M, DV_M)$, where $L = [x, y]$. The position coordinates here are coordinates established in the whole keyboard image area according to a predefined coordinate system, such as coordinates under a right-angle coordinate system established by using the lower left corner of the keyboard as the coordinate origin under normal operating conditions. It is important to note that before extracting a plurality of feature points in the image P, further image adjustment processing such as image cropping can be performed to eliminate keyboard imaging under environmental interference.

In Step 203, the image recognition model TCM is used to process the image P obtained in Step 201 to generate a feature vector of the image. The feature vector may be a classification indication output of the image recognition model TCM. For example the classification indication output may be a confidence probability, which may be defined as the recognition code SN of the current keyboard, i.e., the feature vector. In an embodiment of the present invention, the image recognition model TCM may be a neural network model which implements binary classification. For example, an activation function sigmoid or tanh is used to output a classification probability value, which may be used as a recognition code SN. In the present invention, the image recognition model TCM can be a neural network model for image classification obtained by training samples collected from a target to be recognized such as a keyboard, or be achieved by other algorithms obtained based on big data processing and machine learning.

In Step 204, the feature point information $(L_1, DV_1)$, $(L_2, DV_2)$, ..., $(L_M, DV_M)$ determined in Step 202 and the recognition code SN calculated in Step 203 are stored in the verification server as the feature points of the current keyboard and the registration code for future verification of this keyboard.

In Step 203 of the above-mentioned embodiment, the recognition code SN of this keyboard is calculated for the processing of one image frame. In another embodiment of the present invention, the recognition code SN is calculated by processing a plurality of image frames obtained at different photographing angles according to another embodiment of the present invention so as to more accurately reflect the visual differences of the textured surface of every keyboard at different angles, thus highlighting the difference of every keyboard more.

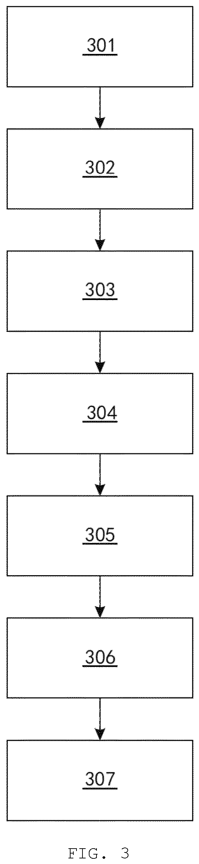

The target registration method of another embodiment of the present invention is described below by referring to FIG. 3. In this embodiment, the method of the present invention is described by taking keyboard recognition as an example.

In Step 301, the keyboard is still kept on the console, the mobile phone flash is turned on, and the mobile phone is moved or turned in a certain rotation direction (e.g., clockwise) to obtain a series of image frames $P_1$, $P_2$, $P_3$, ..., $P_N$ of the target 300 at different photographing angles. At the same time, photographing angles $\theta_1$, $\theta_2$, ..., $\theta_N$ of every image frame is obtained. According to an embodiment, the photographing angles $\theta_1$, $\theta_2$, ..., $\theta_N$ of N image frames can be directly measured using the built-in angle sensor of the mobile phone. For example, the continuous shooting function of the mobile phone can be used. In the process of continuously shooting the target surface using the mobile phone, the angle change information of the three axes in the angle sensor is read while the image sensor takes pictures to obtain a plurality of image frames, thus obtaining the plurality of image frames P and the angle θ under each frame. It is important to note that the threshold $\theta_T$ can be used to filter out any of these images whose angle difference between adjacent images is larger than the threshold $\theta_T$, thus extracting N image frames $P_1$, $P_2$, $P_3$, ..., $P_N$ which meet the threshold requirements. The threshold $\theta_T$ usually depends on the focal length of the image sensor and the distance between the image sensor and the flash. Based on the statistics of mobile phones available on the market, the threshold $\theta_T$ can be set to, for example, 5 degrees; however, the present invention is not limited to this and the threshold $\theta_T$ can be set according to other practical requirements. In addition, it is important to note that the N image frames for subsequent processing can come from the same continuous shooting operation or different continuous shooting operations as long as it is ensured that the plurality of image frames obtained under every continuous shooting operation meet the above-mentioned threshold requirements.

In Step 302, any of the N image frames, for example, $P_1$, is selected and, as in Step 202 of FIG. 2, a plurality of feature points or at least one feature zone defined by the plurality of feature points in the image $P_1$ is extracted. For example, as an embodiment, M feature points can be extracted around, for example, the shift key on the right of the keyboard, including the position coordinates [x, y] and description vectors DV of the feature points, hereafter denoted as $(L_1, DV_1)$, $(L_2, DV_2)$, ..., $(L_M, DV_M)$.

In Step 303, a differential angle image DAI between every two adjacent images of the N image frames is calculated. Therefore, any of the N image frames, for example, $P_1$, is specified as a reference image and the remaining N-1 frame images are geometrically registered to image $P_1$ according to an embodiment of the present invention. To achieve image registration, the same feature points to be registered on two images must be determined first. As an embodiment, feature points can be extracted around specific keys on the keyboard, including the position coordinates [x, y] and description vectors of the feature points, and the feature points that match each other on different images are determined by matching the description vectors of the feature points at different positions. Here, the matching of the description vectors can be represented by calculating the relative distance of the description vectors of different feature points. It is assumed that the feature points [x, y] on image $P_1$ match with the feature points [x', y'] on image $P_2$.

Then

$$\begin{bmatrix} x' \\ y' \\ 1 \end{bmatrix} = \begin{bmatrix} h_{11} & h_{12} & h_{13} \\ h_{21} & h_{22} & h_{23} \\ 0 & 0 & 1 \end{bmatrix} \begin{bmatrix} x \\ y \\ 1 \end{bmatrix}$$

where $H = \begin{bmatrix} h_{11} & h_{12} & h_{13} \\ h_{21} & h_{22} & h_{23} \\ 0 & 0 & 1 \end{bmatrix}$, i.e., the homography transformation matrix. Therefore, the coefficients h in the homography matrix H can be solved by finding a plurality of pairs of [x', y'] and [x, y].

Based on the established homography transformation matrix H, the entire $P_2$ is registered to $P_1$, thus forming the first transformed image frame $P_2$'. Similarly, a homography transformation matrix between $P_1$ and $P_3$ is established, and the entire $P_3$ is registered to $P_1$, thus forming the second transformed image frame $P_3$'. In this way, the transformed image frames ($P_1$', $P_2$', $P_3$', ..., $P_i$', ..., $P_N$') of the 1st to Nth image frames ($P_1$, $P_2$, $P_3$, ..., $P_i$, ..., $P_N$) are obtained, where the first image frame $P_1$ remains unchanged before and after the transformation, i.e., $P_1$' = $P_1$. Therefore, the differential angle images $\Delta Pi = P_i$' - $P_1$ between these N transformed image frames and the first image frame $P_1$ can be calculated using the following formula, where $1 \le i \le N$. N differential angle images $\Delta P_1$-$\Delta P_N$ are obtained accordingly, where $\Delta P_1 = 0$. As mentioned earlier, in the case that the image P is expressed in intensity, $\Delta P$ represents the intensity difference between the two image frames $P_{i+1}$ and $P_i$; in the case that the image P is expressed in greyscale, $\Delta P$ represents the greyscale difference between the two image frames $P_{i+1}$ and $P_i$.

In Step 304, a photographing angle difference $\Delta\theta_i = \theta_i - \theta_{i-1}$ between every adjacent pair of image frames ($P_{i-1}$, $P_i$) is calculated, and thus a weight $\gamma_i$ is assigned to the differential angle image $\Delta P_i$ based on the photographing angle difference $\triangle\theta_i$. As an embodiment, consideration is given to the roughness of the target surface when a weight is assigned. For example, when the surface roughness is low, differences can be observed only at a relatively large angle change; if the roughness is high, a relatively small angle change can describe this change better, so the weights of each photo angle difference can be set based on different cases.

In Step 305, a total differential angle image $S_{DAI}$ is calculated by multiplying a plurality of differential angle images $\triangle P$ by their respective assigned weights, i.e.,

$$S_{DAI} = \sum_{i=1}^{N} (\gamma i \bullet \varDelta Pi)$$

In Step 306, an image recognition model TCM is used to process the total differential angle image $S_{DAI}$ obtained in Step 305 to generate a classification indication output of the image while defining the output value as a feature vector or recognition code SN of the current keyboard to be recognized. In an embodiment of the present invention, the image recognition model TCM may be a neural network model which implements binary classification. For example, an activation function sigmoid or tanh is used to output a classification probability value, which may be used as a recognition code SN.

The image recognition model TCM can be achieved using a convolutional neural network (CNN) and a recurrent neural network (RNN), but the image recognition model TCM is not limited to a neural network model and can also be any big data machine learning model expressed using other algorithms or mathematical representations as long as such algorithms or mathematical representations can learn texture scattering features.

In Step 307, the feature point information determined in Step 302 is stored in the verification server as feature points of the current keyboard, including the position coordinates and description vectors of the fea-

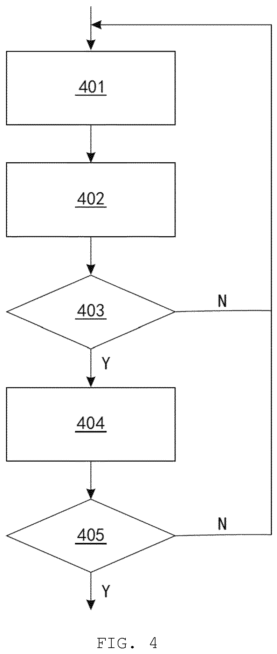

ture points, i.e., $(L_1, DV_1)$, $(L_2, DV_2)$, ..., $(L_M, DV_M)$. In addition, the recognition code SN calculated in Step 306 and the feature point information are correlatively stored in the verification server as the registration code of the current keyboard. The stored feature points and registration code are used for the verification of this keyboard. FIG. 4 is a method flow chart of verifying a target to be verified according to an embodiment of the present invention. As shown in FIG. 4, in Step 401, the verification server receives an image P' of a target to be verified such as a keyboard from a user's electronic device, wherein the electronic device includes a built-in image sensor and an auxiliary light source with a relatively fixed position relation and the image P' is captured using the image sensor while the auxiliary light source is turned on and shines on the surface of the target. Here, the electronic device may be a mobile phone or a tablet computer.

In Step 402, the verification server extracts feature point information of a predetermined area on the image P'. For example, the description vectors $DV'_1$, $DV'_2$, ..., $DV'_M$ of M predetermined locations $L_1$, $L_2$, ..., $L_M$ of the shift key on the right of the image P' may be extracted as required at the time of registration.

In Step 403, the verification server matches the extracted description vectors $DV'_1$, $DV'_2$, ..., $DV'_M$ with the description vectors $(DV_1, DV_2, ..., DV_M)$ in the pre-registered feature point information in the server, for example, calculating the relative distance D between the corresponding description vectors at the same location L. If the relative distance $(DV'_i - DV_i)$ between every pair of vectors of the M pairs of description vectors is smaller than the distance threshold $D_T$, the feature points on the image P' are deemed to match the feature points of the registered image P. The process proceeds to Step 404, otherwise it returns to Step 401. In another embodiment, it is not required that all the relative distances $(DV'_i - DV_i)$ between M pairs of description vectors be smaller than the distance threshold $D_T$. For example, as long as more than 80% of the relative distances are smaller than the distance threshold $D_T$, the feature points on the image P' can be deemed to match the feature points of the registered image P.

In Step 404, the verification server processes the image P' to generate a feature vector of the image such as the verification code SN' using an image recognition model TCM which is used when a prestored image is used for registration. Subsequently, in Step 405, the verification server determines whether the verification code SN' matches with the registration code SN. For example, if both are the same or within a predetermined tolerance range, the target keyboard passes the verification; otherwise, it confirms that the keyboard to be verified is not a registered keyboard, the verification fails, and the process returns to Step 401 to continue to wait for the next verification.

In this embodiment, the verification server receives one image frame P' from the user's electronic device to verify the keyboard. In another embodiment, a sequence of image frames are received. Therefore, the verification server may generate a total differential image $S'_{DAI}$ of a sequence of image frames based on Steps 303-305 in FIG. 3, and process the total differential image $S_{DAI}$ to generate the verification code SN' using the image recognition model TCM trained for differential angle images.

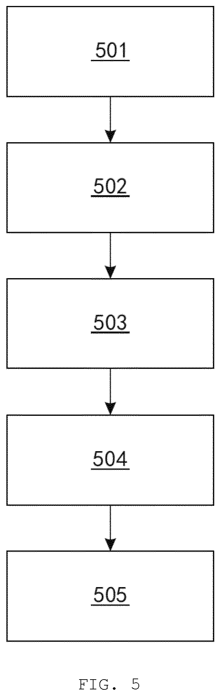

In the above-mentioned embodiment, the user's electronic device uploads the captured image to the verification server for subsequent verification processing. In another embodiment of the present invention, after the user's electronic device captures the image P', the image P' is processed at the user's electronic device rather than uploaded by taking full advantage of the current powerful processing capability of the user's electronic device itself to obtain the P' feature point information (L, DV') and to generate the verification code SN'. The user's electronic device then sends the information (L, DV') and the verification code SN' to the verification server for verification. FIG. 5 is a flow chart of a verification method according to this embodiment. This method can be achieved using a user's electronic device such as a mobile phone. The electronic device includes a built-in image sensor and an auxiliary light source with a relatively fixed position relation. A processor with computing power and a memory with stored instructions are also included in the mobile phone, wherein the processor executes the instructions in the memory to implement the method steps described below. Here, the instructions are stored in the memory as a target verification module in the form of a software module.

In Step 501, the auxiliary light source in the mobile phone is turned on to shine on the target while using the image sensor in the electronic device to capture an image P' of the target. In Step 502, feature point information of a predetermined area on the image P' is extracted. In Step 503, an image recognition model TCM is used to process the image P' to generate feature vectors of the image such as a verification code SN'. In Step 504, the feature point information and the verification code SN' are transferred to a remote server and the processing results of the verification server are awaited. Here, the server makes a response on whether to pass the verification based on a matching degree of the received feature point information with prestored registration feature points and registration code. In Step 505, from the remote server a response on whether the target passes the verification is received, thus enabling the user to achieve product verification based on the mobile phone.

The target verification method of the present invention can be achieved using any electronic device that integrates a light source and an image sensor. In addition to a mobile phone, such an electronic device includes a tablet computer. The light source is on at all times during the shooting process, thus providing constant light for the shooting of every image frame. According to the present invention, an electronic device such as a mobile phone is used to capture images during both target registration and target verification, and the flash is on throughout the capture of the target image to dominate the ambient light for image shooting, so the images captured at both the registration side and the user side are obtained under the same or similar environmental conditions and shooting methods. This effectively avoids interference with product images due to external factors, thus hindering the accurate verification of the product.

The present invention is shown and described above in detail using the accompanying drawings and preferred embodiments, but is not limited to these disclosed embodiments. Any modifications including the merging, replacement, addition and deletion of features may be made by those skilled in the art on the basis of the above-mentioned detailed disclosure. For example, not all steps in the method embodiment shown in FIG. 3 are necessary and those skilled in the art may make modifications on this basis. For example, the step of assigning a weight to the differential angle image $\triangle P$ between image frames based on the photographing angle difference $\triangle \theta_i$ in Step 304 may be omitted in another embodiment, so such a solution is also considered part of the present disclosure. The scope of protection of the present invention is defined by the appended claims.

## Claims

1.  Method of using an electronic device to achieve target verification, wherein the electronic device includes a built-in image sensor (100) and an auxiliary light source (200) with a relatively fixed position relation and the method comprises:

    turning on the light source (200) while using the image sensor (100) to capture an image (P') of a target (300);
    extracting feature point information of the captured image (P');
    using an image recognition model to process the captured image (P') to generate feature vectors of the captured image (P'); and
    storing the feature point information and the feature vectors for use as feature point information and feature vectors to verify the target (300),
    wherein the feature point information comprises: position information of the feature points on the target (300) and description vectors (DV) of the feature points,
    wherein the captured image (P') of the target (300) is a plurality of image frames ($P_1$, ..., $P_i$, ..., $P_N$) captured at different photographing angles ($\theta_i$),
    wherein using an image recognition model to process the captured image (P') to generate feature vectors of the captured image (P') comprises:

    using homography transformation to register the plurality of image frames ($P_1$, ..., $P_i$, ..., $P_N$) of the captured image (P'),
    by registering every image frame of the plurality of image frames ($P_1$, ..., $P_i$, ..., $P_N$) of the captured image (P') to an adjacent previous image frame ($P_{i-1}$) of the captured image (P') as a reference image frame; or
    by using an image frame from the plurality of image frames ($P_1$, ..., $P_i$, ..., $P_N$) of the captured image (P') as the reference image frame and registering the remaining image frames of the plurality of image frames ($P_1$, ..., $P_i$, ..., $P_N$) of the captured image (P') to the reference image frame, and calculating differential angle images ($\triangle P_i$) of the captured image (P') between every two adjacent images of the registered image frames ($P_1'$, ..., $P_i'$, ..., $P_N'$) of the captured image (P'), the differential angle images ($\triangle P_i$) of the captured image (P') representing a light scattering difference of a surface texture of the target (300) at different photographing angles ($\theta_i$); and
    processing the differential angle images ($\triangle P_i$) of the captured image (P') to generate the feature vectors of the captured image (P') representing the target (300),
    wherein processing the differential angle images ($\triangle P_i$) of the captured image (P') comprises:

    summing the differential angle images ($\triangle P_i$) of the captured image (P') to generate a total differential angle image ($S_{DAI}$) of the captured image (P') of the target (300) to be recognized at different photographing angles ($\theta_i$); and
    using the image recognition model to process the total differential angle image ($S_{DAI}$) of the captured image (P') to output a recognition code (SN) of the captured image (P').

2.  Method according to Claim 1, further comprising:

    selecting the same reference object on the plurality of image frames ($P_1$, ..., $P_i$, ..., $P_N$) of the captured image (P') and extracting reference feature point information of the captured image (P') of the reference object; and
    processing the reference feature point information of the captured image (P') to generate a transformation matrix (H) of the homography transformation.

3.  Method according to Claim 1, wherein summing the plurality of differential angle images ($\triangle P_i$) of the captured image (P') comprises:

based on a photographing angle difference ($\triangle\theta_i$) corresponding to each differential angle image ($\triangle P_i$) of the captured image (P'), allocating a weight ($\gamma_i$) to this differential angle image ($\triangle P_i$); and
summing the plurality of weighed differential angle images ($\gamma_i\cdot\triangle P_i$) of the captured image (P') to calculate the total differential angle image ($S_{DAI}$) of the captured image (P').

4. Method according to Claim 1, wherein the image recognition model to process the captured image (P') is a trained neural network model.

5. Method according to Claim 1, further comprising:

receiving an image (P') of a target (300) to be verified from a user's electronic device;
extracting feature point information of a predetermined area on the received image (P');
using an image recognition model to process the received image (P') to generate feature vectors of the received image (P'); and
matching the feature point information and the feature vectors of the received image (P') with the stored feature point information and the stored feature vectors to verify the target (300).

6. Method according to Claim 5, wherein the received image (P') of the target (300) to be verified is a plurality of image frames ($P_1$, ..., $P_i$, ..., $P_N$) captured at different photographing angles ($\theta_i$),
wherein using an image recognition model to process the received image (P') to generate feature vectors of the received image (P') comprises:

using homography transformation to register the plurality of image frames ($P_1$, ..., $P_i$, ..., $P_N$) of the received image (P'),
by registering every image frame of the plurality of image frames ($P_1$, ..., $P_i$, ..., $P_N$) of the received image (P') to an adjacent previous image frame ($P_{i-1}$) of the received image (P') as a reference image frame; or
by using an image frame from the plurality of image frames ($P_1$, ..., $P_i$, ..., $P_N$) of the received image (P') as the reference image frame and registering the remaining image frames of the plurality of image frames ($P_1$, ..., $P_i$, ..., $P_N$) of the received image (P') to the reference image frame, and
calculating differential angle images ($\triangle P_i$) of the received image (P') between every two adjacent images of the registered image frames ($P_1'$, ..., $P_i'$, ..., $P_N'$) of the received image (P'), the differ-

ential angle images ($\triangle P_i$) of the received image (P') representing a light scattering difference of the surface texture of the recognized target (300) at different photographing angles ($\theta_i$); and
processing the differential angle images ($\triangle P_i$) of the received image (P') to generate the feature vectors of the received image (P') representing the target (300) to be verified.

7. Method according to Claim 6, wherein processing the differential angle images ($\triangle P_i$) of the received image (P') comprises:

summing the differential angle images ($\triangle P_i$) of the received image (P') to generate a total differential angle image ($S_{DAI}$) of the received image (P') of the target (300) to be recognized at different photographing angles ($\theta_i$); and
using the image recognition model to process the total differential angle image ($S_{DAI}$) of the received image (P') to output a recognition code (SN) of the received image (P').

8. Method according to Claim 5, further comprising:

selecting the same reference object on the plurality of image frames ($P_1$, ..., $P_i$, ..., $P_N$) of the received image (P') and extracting feature point information of the received image (P') of the reference object; and
processing the feature point information of the received image (P') to generate a transformation matrix (H) of the homography transformation.

9. Method according to Claim 7, wherein summing the plurality of differential angle images ($\triangle P_i$) of the received image (P') comprises:

based on a photographing angle difference ($\triangle\theta_i$) corresponding to each differential angle image ($\triangle P_i$) of the received image (P'), allocating a weight ($\gamma_i$) to this differential angle image ($\triangle P_i$); and
summing the plurality of weighed differential angle images ($\gamma_i\cdot\triangle P_i$) of the received image (P') to calculate the total differential angle image ($S_{DAI}$) of the received image (P').

10. Method according to Claim 5, wherein the image recognition model to process the received image (P') is a trained neural network model.

11. Method according to Claim 5, wherein
matching the feature point information and the feature vectors of the received image (P') with the stored feature point information and the stored feature vectors comprises:
expressing a matching degree of the feature points by calculating a relative distance of description vectors (DV) of different feature points.

12. Method according to Claim 1, further comprising: transferring the feature point information and the feature vectors of the captured image (P') to a remote server; and
receiving from the remote server a response on whether the target (300) passes verification, wherein the server makes a response based on a matching degree of the transferred feature point information and feature vectors with the stored feature point information and the stored feature vectors.

13. Method according to Claim 12, further comprising:

selecting the same reference object on the plurality of image frames ($P_1$, ..., $P_i$, ..., $P_N$) of the captured image (P') and extracting feature point information of the captured image (P') of the reference object; and
processing the feature point information of the captured image (P') to generate a transformation matrix (H) of the homography transformation.

14. Method according to Claim 12, wherein summing the plurality of differential angle images ($\triangle P_i$) of the captured image (P') comprises:

based on a photographing angle difference ($\triangle \theta_i$) corresponding to each differential angle image ($\triangle P_i$) of the captured image (P'), allocating a weight ($\gamma_i$) to this differential angle image ($\triangle P_i$); and
summing the plurality of weighed differential angle images ($\gamma_i \cdot \triangle P_i$) of the captured image (P') to calculate a total differential angle image ($S_{DAI}$) of the captured image (P').

15. Method according to Claim 12, wherein the image recognition model to process the captured image (P') is a trained neural network model.

16. Electronic device in which an image sensor (100) and an auxiliary light source (200) used to provide auxiliary light for photographing are integrated, wherein the electronic device further comprises an image recognition module and is used to execute the method according to one of Claims 12 to 15.

**Patentansprüche**

1. Verfahren zur Verwendung einer elektronischen Vorrichtung zum Erreichen einer Zielverifizierung, wobei die elektronische Vorrichtung einen eingebauten Bildsensor (100) und eine Hilfslichtquelle (200) mit einer relativ festen Positionsbeziehung aufweist und das Verfahren Folgendes umfasst:

Einschalten der Lichtquelle (200), während der Bildsensor (100) verwendet wird, um ein Bild (P') eines Ziels (300) aufzunehmen;
Extrahieren von Merkmalspunktinformationen des aufgenommenen Bildes (P');
Verwenden eines Bilderkennungsmodells zum Verarbeiten des aufgenommenen Bildes (P'), um Merkmalsvektoren des aufgenommenen Bildes (P') zu erzeugen; und
Speichern der Merkmalspunktinformationen und der Merkmalsvektoren zur Verwendung als Merkmalspunktinformationen und Merkmalsvektoren zum Verifizieren des Ziels (300), wobei die Merkmalspunktinformationen Folgendes umfassen:

Positionsinformationen der Merkmalspunkte auf dem Ziel (300) und Beschreibungsvektoren (DV) der Merkmalspunkte, wobei es sich bei dem aufgenommenen Bild (P') des Ziels (300) um eine Mehrzahl von Bildframes ($P_1$, ..., $P_i$, ..., $P_N$) handelt, die aus verschiedenen Aufnahmewinkeln ($\theta_i$) aufgenommen wurde,
wobei das Verwenden eines Bilderkennungsmodells zum Verarbeiten des aufgenommenen Bildes (P'), um Merkmalsvektoren des aufgenommenen Bildes (P') zu erzeugen, Folgendes umfasst:

Verwenden einer Homographietransformation zum Registrieren der Mehrzahl von Bildframes ($P_1$, ..., $P_i$, ..., $P_N$) des aufgenommenen Bildes (P'),
indem jeder Bildframe der Mehrzahl von Bildframes ($P_1$, ..., $P_i$, ..., $P_N$) des aufgenommenen Bildes (P') mit einem benachbarten vorherigen Bildframe ($P_{i-1}$) des aufgenommenen Bildes (P') als Referenzbildframe registriert wird; oder
indem ein Bildframe aus der Mehrzahl von Bildframes ($P_1$, ..., $P_i$, ..., $P_N$) des aufgenommenen Bildes (P') als der Referenzbildframe verwendet wird und die verbleibenden Bildframes der Mehrzahl von Bildframes ($P_1$, ..., $P_i$, ..., $P_N$) des aufgenommenen Bildes (P') mit dem Referenzbildframe registriert werden, und
Berechnen von Differenzwinkelbildern ($\triangle P_i$) des aufgenommenen Bildes (P') zwischen jeweils zwei benachbarten Bildern der registrierten Bildframes ($P_1'$, ..., $Pi'$, ..., $P_N'$) des aufgenommenen Bildes (P'), wobei die Differenzwinkelbilder ($\theta_i$)des aufgenommenen Bildes (P') eine Lichtstreuungsdifferenz einer Oberflächentextur des Ziels (300) bei verschiedenen Aufnahmewinkeln ($\Delta P_i$) darstellen; und Verarbeiten der Differenzwinkelbilder ($\Delta P_i$) des aufgenommenen Bildes (P'), um die Merkmalsvektoren des aufgenommenen Bildes (P') zu erzeugen, die das Ziel (300) darstellen, wobei das Verarbeiten der Differenzwinkelbilder ($\Delta P_i$) des aufgenommenen Bildes (P') Folgendes umfasst:

Summieren der Differenzwinkelbilder ($\Delta P_i$) des aufgenommenen Bildes (P'), um ein Gesamtdifferenzwinkelbild ($S_{DAI}$) des aufgenommenen Bildes (P') des Ziels (300) zu erzeugen, das bei verschiedenen Aufnahmewinkeln ($\theta_i$)zu erkennen ist; und Verwenden des Bilderkennungsmodells zum Verarbeiten des Gesamtdifferenzwinkelbildes ($S_{DAI}$) des aufgenommenen Bildes (P'), um einen Erkennungscode (SN) des aufgenommenen Bildes (P') auszugeben.

2. Verfahren nach Anspruch 1, das ferner Folgendes umfasst:

Auswählen desselben Referenzobjekts auf der Mehrzahl von Bildframes ($P_1$, ..., $P_i$, ..., $P_N$) des aufgenommenen Bildes (P') und Extrahieren von Referenzmerkmalspunktinformationen des aufgenommenen Bildes (P') des Referenzobjekts; und Verarbeiten der Referenzmerkmalspunktinformationen des aufgenommenen Bildes (P'), um eine Transformationsmatrix (H) der Homographietransformation zu erzeugen.

3. Verfahren nach Anspruch 1, wobei das Summieren der Mehrzahl von Differenzwinkelbildern ($\Delta P_i$) des aufgenommenen Bildes (P') Folgendes umfasst:

basierend auf einer Aufnahmewinkeldifferenz ($\Delta\theta_i$), die jedem Differenzwinkelbild ($\Delta P_i$) des aufgenommenen Bildes (P') entspricht, Zuweisen einer Gewichtung ($\gamma_i$) zu diesem Differenzwinkelbild ($\Delta P_i$); und Summieren der Mehrzahl von gewichteten Differenzwinkelbildern ($\gamma_i \cdot \triangle P_i$) des aufgenommenen Bildes (P'), um das Gesamtdifferenzwinkelbild ($S_{DAI}$) des aufgenommenen Bildes (P') zu berechnen.

4. Verfahren nach Anspruch 1, wobei das Bilderkennungsmodell zum Verarbeiten des aufgenommenen Bildes (P') ein trainiertes neuronales Netzwerkmodell ist.

5. Verfahren nach Anspruch 1, das ferner Folgendes umfasst:

Empfangen eines Bildes (P') eines zu verifizierenden Ziels (300) von einer elektronischen Vorrichtung eines Benutzers; Extrahieren von Merkmalspunktinformationen eines vorbestimmten Bereichs auf dem empfangenen Bild (P'); Verwenden eines Bilderkennungsmodells zum Verarbeiten des empfangenen Bildes (P'), um Merkmalsvektoren des empfangenen Bildes (P') zu erzeugen; und Vergleichen der Merkmalspunktinformationen und der Merkmalsvektoren des empfangenen Bildes (P') mit den gespeicherten Merkmalspunktinformationen und den gespeicherten Merkmalsvektoren, um das Ziel (300) zu verifizieren.

6. Verfahren nach Anspruch 5, wobei es sich bei dem empfangenen Bild (P') des zu verifizierenden Ziels (300) um eine Mehrzahl von Bildframes ($P_1$, ..., $P_i$, ..., $P_N$) handelt, die aus verschiedenen Aufnahmewinkeln ($\theta_i$) aufgenommen wurde, wobei das Verwenden eines Bilderkennungsmodells zum Verarbeiten des empfangenen Bildes (P'), um Merkmalsvektoren des empfangenen Bildes (P') zu erzeugen, Folgendes umfasst:

Verwenden einer Homographietransformation zum Registrieren der Mehrzahl von Bildframes ($P_1$, ..., $P_i$, ..., $P_N$) des empfangenen Bildes (P'), indem jeder Bildframe der Mehrzahl von Bildframes ($P_1$, ..., $P_i$, ..., $P_N$) des empfangenen Bildes (P') mit einem benachbarten vorherigen Bildframe ($P_{i-1}$) des empfangenen Bildes (P') als Referenzbildframe registriert wird; oder indem ein Bildframe aus der Mehrzahl von Bildframes ($P_1$, ..., $P_i$, ..., $P_N$) des empfangenen Bildes (P') als der Referenzbildframe verwendet wird und die verbleibenden Bildframes der Mehrzahl von Bildframes ($P_1$, ..., $P_i$, ..., $P_N$) des empfangenen Bildes (P') mit dem Referenzbildframe registriert werden, und Berechnen von Differenzwinkelbildern ($\Delta P_i$) des empfangenen Bildes (P') zwischen jeweils zwei benachbarten Bildern der registrierten Bildframes ($P_1'$, ..., Pi', ..., $P_N'$) des empfangenen Bildes (P'), wobei die Differenzwinkelbilder ($\Delta P_i$) des empfangenen Bildes (P') eine Lichtstreuungsdifferenz der Oberflächentextur des erkannten Ziels (300) bei verschiedenen Aufnahmewinkeln ($\theta P_i$) darstellen; und Verarbeiten der Differenzwinkelbilder ($\Delta P_i$) des empfangenen Bildes (P'), um die Merkmalsvektoren des empfangenen Bildes (P') zu erzeugen, die das zu verifizierende Ziel (300) darstellen.

7. Verfahren nach Anspruch 6, wobei das Verarbeiten der Differenzwinkelbilder ($\Delta P_i$) des empfangenen Bildes (P') Folgendes umfasst:

   Summieren der Differenzwinkelbilder ($\Delta P_i$) des empfangenen Bildes (P'), um ein Gesamtdifferenzwinkelbild ($S_{DAI}$) des empfangenen Bildes (P') des Ziels (300) zu erzeugen, das bei verschiedenen Aufnahmewinkeln ($\theta_i$) zu erkennen ist; und Verwenden des Bilderkennungsmodells zum Verarbeiten des Gesamtdifferenzwinkelbildes ($S_{DAI}$) des empfangenen Bildes (P'), um einen Erkennungscode (SN) des empfangenen Bildes (P') auszugeben.

8. Verfahren nach Anspruch 5, das ferner Folgendes umfasst:

   Auswählen desselben Referenzobjekts auf der Mehrzahl von Bildframes ($P_1$, ..., $P_i$, ..., $P_N$) des empfangenen Bildes (P') und Extrahieren von Merkmalspunktinformationen des empfangenen Bildes (P') des Referenzobjekts; und Verarbeiten der Merkmalspunktinformationen des empfangenen Bildes (P'), um eine Transformationsmatrix (H) der Homographietransformation zu erzeugen.

9. Verfahren nach Anspruch 7, wobei das Summieren der Mehrzahl von Differenzwinkelbildern ($\Delta P_i$) des empfangenen Bildes (P') Folgendes umfasst:

   basierend auf einer Aufnahmewinkeldifferenz ($\Delta\theta_i$), die jedem Differenzwinkelbild ($\Delta P_i$) des empfangenen Bildes (P') entspricht, Zuweisen einer Gewichtung ($\gamma_i$) zu diesem Differenzwinkelbild ($\Delta P_i$); und Summieren der Mehrzahl von gewichteten Differenzwinkelbildern ($\gamma_i \cdot \Delta P_i$) des empfangenen Bildes (P'), um das Gesamtdifferenzwinkelbild ($S_{DAI}$) des empfangenen Bildes (P') zu berechnen.

10. Verfahren nach Anspruch 5, wobei das Bilderkennungsmodell zum Verarbeiten des empfangenen Bildes (P') ein trainiertes neuronales Netzwerkmodell ist.

11. Verfahren nach Anspruch 5, wobei das Vergleichen der Merkmalspunktinformationen und der Merkmalsvektoren des empfangenen Bildes (P') mit den gespeicherten Merkmalspunktinformationen und den gespeicherten Merkmalsvektoren Folgendes umfasst:
   Ausdrücken eines Übereinstimmungsgrads der Merkmalspunkte durch Berechnen eines relativen Abstands von Beschreibungsvektoren (DV) verschiedener Merkmalspunkte.

12. Verfahren nach Anspruch 1, das ferner Folgendes umfasst:

   Übertragen der Merkmalspunktinformationen und der Merkmalsvektoren des aufgenommenen Bildes (P') an einen entfernten Server; und Empfangen einer Antwort von dem entfernten Server, ob das Ziel (300) eine Verifizierung besteht, wobei der Server eine Antwort basierend auf einem Übereinstimmungsgrad der übertragenen Merkmalspunktinformationen und Merkmalsvektoren mit den gespeicherten Merkmalspunktinformationen und den gespeicherten Merkmalsvektoren erstellt.

13. Verfahren nach Anspruch 12, das ferner Folgendes umfasst:

   Auswählen desselben Referenzobjekts auf der Mehrzahl von Bildframes ($P_1$, ..., $P_i$, ..., $P_N$) des aufgenommenen Bildes (P') und Extrahieren von Merkmalspunktinformationen des aufgenommenen Bildes (P') des Referenzobjekts; und Verarbeiten der Merkmalspunktinformationen des aufgenommenen Bildes (P'), um eine Transformationsmatrix (H) der Homographietransformation zu erzeugen.

14. Verfahren nach Anspruch 12, wobei das Summieren der Mehrzahl von Differenzwinkelbildern ($\Delta P_i$) des aufgenommenen Bildes (P') Folgendes umfasst:

   basierend auf einer Aufnahmewinkeldifferenz ($\Delta\theta_i$), die jedem Differenzwinkelbild ($\Delta P_i$) des aufgenommenen Bildes (P') entspricht, Zuweisen einer Gewichtung ($\gamma_i$) zu diesem Differenzwinkelbild ($\Delta P_i$); und Summieren der Mehrzahl von gewichteten Differenzwinkelbildern ($\gamma_i \cdot \Delta P_i$) des aufgenommenen Bildes (P'), um ein Gesamtdifferenzwinkelbild ($S_{DAI}$) des aufgenommenen Bildes (P') zu berechnen.

15. Verfahren nach Anspruch 12, wobei das Bilderkennungsmodell zum Verarbeiten des aufgenommenen Bildes (P') ein trainiertes neuronales Netzwerkmodell ist.

16. Elektronische Vorrichtung, in die ein Bildsensor (100) und eine Hilfslichtquelle (200), die zum Bereitstellen von Hilfslicht zum Fotografieren verwendet wird, integriert sind, wobei die elektronische Vorrichtung ferner ein Bilderkennungsmodul umfasst und zum Ausführen des Verfahrens nach einem der Ansprüche 12 bis 15 verwendet wird.

**Revendications**

1. Procédé d'utilisation d'un dispositif électronique pour réaliser une vérification de cible, le dispositif électronique comportant un capteur d'images intégré (100) et une source de lumière auxiliaire (200) avec une relation de position relativement fixe et le procédé comprenant :

    l'allumage de la source de lumière (200) pendant l'utilisation du capteur d'images (100) pour capturer une image (P') d'une cible (300) ;
    l'extraction d'informations sur des points caractéristiques de l'image capturée (P') ;
    l'utilisation d'un modèle de reconnaissance d'images pour traiter l'image capturée (P') afin de générer des vecteurs caractéristiques de l'image capturée (P') ; et
    le stockage des informations sur des points caractéristiques et des vecteurs caractéristiques pour qu'ils soient utilisés comme des informations sur des points caractéristiques et des vecteurs caractéristiques afin de vérifier la cible (300),
    dans lequel les informations sur des points caractéristiques comprennent : des informations de position des points caractéristiques sur la cible (300) et des vecteurs de description (DV) des points caractéristiques,
    dans lequel l'image capturée (P') de la cible (300) est une pluralité de trames d'image $(P_1, ..., P_i, ..., P_N)$ capturées à différents angles de prise de vues $(\theta_i)$,
    dans lequel l'utilisation d'un modèle de reconnaissance d'images pour traiter l'image capturée (P') afin de générer des vecteurs caractéristiques de l'image capturée (P') comprend :

        l'utilisation d'une transformation homographique pour aligner la pluralité de trames d'image $(P_1, ..., P_i, ..., P_N)$ de l'image capturée (P'),
        par alignement de chaque trame d'image de la pluralité de trames d'image $(P_1, ..., P_i, ..., P_N)$ de l'image capturée (P') sur une trame d'image adjacente précédente $(P_{i-1})$ de l'image capturée (P') servant de trame d'image de référence ; ou
par utilisation d'une trame d'image issue de la pluralité de trames d'image $(P_1, ..., P_i, ..., P_N)$ de l'image capturée (P') comme trame d'image de référence et alignement des trames d'image restantes de la pluralité de trames d'image $(P_1, ..., P_i, ..., P_N)$ de l'image capturée (P') sur la trame d'image de référence, et
le calcul d'images angulaires différentielles $(\Delta P_i)$ de l'image capturée (P') entre les images de chaque paire d'images adjacentes des trames d'image alignées $(P_1', ..., P_i', ..., P_N')$ de l'image capturée (P'), les images angulaires différentielles $(\Delta P_i)$ de l'image capturée (P') représentant une différence de diffusion de la lumière d'une texture de surface de la cible (300) à différents angles de prise de vues $(\theta_i)$ ; et
le traitement des images angulaires différentielles $(\Delta P_i)$ de l'image capturée (P') pour générer les vecteurs caractéristiques de l'image capturée (P') représentant la cible (300),
dans lequel le traitement des images angulaires différentielles $(\Delta P_i)$ de l'image capturée (P') comprend :

        la sommation des images angulaires différentielles $(\Delta P_i)$ de l'image capturée (P') pour générer une image angulaire différentielle totale $(S_{DAI})$ de l'image capturée (P') de la cible (300) devant être reconnue à différents angles de prise de vues $(\theta_i)$ ; et
        l'utilisation du modèle de reconnaissance d'images pour traiter l'image angulaire différentielle totale $(S_{DAI})$ de l'image capturée (P') afin de délivrer un code de reconnaissance (SN) de l'image capturée (P').

2. Procédé selon la revendication 1, comprenant en outre :

    la sélection du même objet de référence sur la pluralité de trames d'image $(P_1, ..., P_i, ..., P_N)$ de l'image capturée (P') et l'extraction d'informations sur des points caractéristiques de référence de l'image capturée (P') de l'objet de référence ; et
    le traitement des informations sur des points caractéristiques de référence de l'image capturée (P') pour générer une matrice de transformation (H) de la transformation homographique.

3. Procédé selon la revendication 1, dans lequel la sommation de la pluralité d'images angulaires diffé-

rentielles ($\Delta P_i$) de l'image capturée (P') comprend :

sur la base d'une différence d'angle de prise de vues ($\triangle\theta_i$) correspondant à chaque image angulaire différentielle ($\Delta P_i$) de l'image capturée (P'), l'attribution d'un poids ($\gamma_i$) à cette image angulaire différentielle ($\Delta P_i$) ; et

la sommation de la pluralité d'images angulaires différentielles pondérées ($\gamma_i\cdot\Delta P_i$) de l'image capturée (P') pour calculer l'image angulaire différentielle totale ($S_{DAI}$) de l'image capturée (P').

4. Procédé selon la revendication 1, dans lequel le modèle de reconnaissance d'images pour traiter l'image capturée (P') est un modèle de réseau neuronal entraîné.

5. Procédé selon la revendication 1, comprenant en outre :

la réception d'une image (P') d'une cible (300) devant être vérifiée depuis un dispositif électronique d'un utilisateur ;

l'extraction d'informations sur des points caractéristiques d'une zone prédéterminée sur l'image reçue (P') ;

l'utilisation d'un modèle de reconnaissance d'images pour traiter l'image reçue (P') afin de générer des vecteurs caractéristiques de l'image reçue (P') ; et

la mise en correspondance des informations sur des points caractéristiques et des vecteurs caractéristiques de l'image reçue (P') avec les informations sur des points caractéristiques stockées et les vecteurs caractéristiques stockés pour vérifier la cible (300).

6. Procédé selon la revendication 5, dans lequel l'image reçue (P') de la cible (300) devant être vérifiée est une pluralité de trames d'image ($P_1$, ..., $P_i$, ..., $P_N$) capturées à différents angles de prise de vues ($\theta_1$), dans lequel l'utilisation d'un modèle de reconnaissance d'images pour traiter l'image reçue (P') afin de générer des vecteurs caractéristiques de l'image reçue (P') comprend :

l'utilisation d'une transformation homographique pour aligner la pluralité de trames d'image ($P_1$, ..., $P_i$, ..., $P_N$) de l'image reçue (P'), par alignement de chaque trame d'image de la pluralité de trames d'image ($P_1$, ..., $P_i$, ..., $P_N$) de l'image reçue (P') sur une trame d'image adjacente précédente ($P_{i-1}$) de l'image reçue (P') servant de trame d'image de référence ; ou par utilisation d'une trame d'image issue de la pluralité de trames d'image ($P_1$, ..., $P_i$, ..., $P_N$) de l'image reçue (P') comme trame d'image de référence et alignement des trames d'image restantes de la pluralité de trames d'image ($P_1$, ..., $P_i$, ..., $P_N$) de l'image reçue (P') sur la trame d'image de référence, et

le calcul d'images angulaires différentielles ($\Delta P_i$) de l'image reçue (P') entre les images de chaque paire d'images adjacentes des trames d'image alignées ($P_1$', ..., $P_i$', ..., $P_N$') de l'image reçue (P'), les images angulaires différentielles ($\Delta P_i$) de l'image reçue (P') représentant une différence de diffusion de la lumière de la texture de surface de la cible reconnue (300) à différents angles de prise de vues ($\theta_i$) ; et

le traitement des images angulaires différentielles ($\Delta P_i$) de l'image reçue (P') pour générer les vecteurs caractéristiques de l'image reçue (P') représentant la cible (300) devant être vérifiée.

7. Procédé selon la revendication 6, dans lequel le traitement des images angulaires différentielles ($\Delta P_i$) de l'image reçue (P') comprend :

la sommation des images angulaires différentielles ($\Delta P_i$) de l'image reçue (P') pour générer une image angulaire différentielle totale ($S_{DAI}$) de l'image reçue (P') de la cible (300) devant être reconnue à différents angles de prise de vues ($\theta_i$) ; et

l'utilisation du modèle de reconnaissance d'images pour traiter l'image angulaire différentielle totale ($S_{DAI}$) de l'image reçue (P') afin de délivrer un code de reconnaissance (SN) de l'image reçue (P').

8. Procédé selon la revendication 5, comprenant en outre :

la sélection du même objet de référence sur la pluralité de trames d'image ($P_1$, ..., $P_i$, ..., $P_N$) de l'image reçue (P') et l'extraction d'informations sur des points caractéristiques de l'image reçue (P') de l'objet de référence ; et

le traitement des informations sur des points caractéristiques de l'image reçue (P') pour générer une matrice de transformation (H) de la transformation homographique.

9. Procédé selon la revendication 7, dans lequel la sommation de la pluralité d'images angulaires différentielles ($\Delta P_i$) de l'image reçue (P') comprend :

sur la base d'une différence d'angle de prise de vues ($\triangle\theta_i$) correspondant à chaque image angulaire différentielle ($\Delta P_i$) de l'image reçue (P'), l'attribution d'un poids ($\gamma_i$) à cette image angulaire différentielle ($\Delta P_i$) ; et

la sommation de la pluralité d'images angulaires différentielles pondérées ($\gamma_i\cdot\Delta P_i$) de l'image reçue (P') pour calculer l'image angulaire différentielle totale ($S_{DAI}$) de l'image reçue (P').

**10.** Procédé selon la revendication 5, dans lequel le modèle de reconnaissance d'images pour traiter l'image reçue (P') est un modèle de réseau neuronal entraîné.

**11.** Procédé selon la revendication 5, dans lequel

la mise en correspondance des informations sur des points caractéristiques et des vecteurs caractéristiques de l'image reçue (P') avec les informations sur des points caractéristiques stockées et les vecteurs caractéristiques stockés comprend :
l'expression d'un degré de correspondance des points caractéristiques par calcul d'une distance relative de vecteurs de description (DV) de différents points caractéristiques.

**12.** Procédé selon la revendication 1, comprenant en outre :

le transfert des informations sur des points caractéristiques et des vecteurs caractéristiques de l'image capturée (P') à un serveur distant ; et
la réception, depuis le serveur distant, d'une réponse quant à la vérification réussie ou non de la cible (300), dans lequel le serveur apporte une réponse basée sur un degré de correspondance entre les informations sur des points caractéristiques et les vecteurs caractéristiques transférés, et les informations sur des points caractéristiques stockées et les vecteurs caractéristiques stockés.

**13.** Procédé selon la revendication 12, comprenant en outre :

la sélection du même objet de référence sur la pluralité de trames d'image ($P_1$, ..., $P_i$, ..., $P_N$) de l'image capturée (P') et l'extraction d'informations sur des points caractéristiques de l'image capturée (P') de l'objet de référence ; et
le traitement des informations sur des points caractéristiques de l'image capturée (P') pour générer une matrice de transformation (H) de la transformation homographique.

**14.** Procédé selon la revendication 12, dans lequel la sommation de la pluralité d'images angulaires différentielles ($\Delta P_i$) de l'image capturée (P') comprend :

sur la base d'une différence d'angle de prise de vues ($\triangle\theta_i$) correspondant à chaque image angulaire différentielle ($\Delta P_i$) de l'image capturée (P'), l'attribution d'un poids ($\gamma_i$) à cette image angulaire différentielle ($\Delta P_i$) ; et

la sommation de la pluralité d'images angulaires différentielles pondérées ($\gamma_i \cdot \Delta P_i$) de l'image capturée (P') pour calculer une image angulaire différentielle totale ($S_{DAI}$) de l'image capturée (P').

**15.** Procédé selon la revendication 12, dans lequel le modèle de reconnaissance d'images pour traiter l'image capturée (P') est un modèle de réseau neuronal entraîné.

**16.** Dispositif électronique dans lequel sont intégrés un capteur d'images (100) et une source de lumière auxiliaire (200) utilisée pour fournir de la lumière auxiliaire pour des prises de vues, le dispositif électronique comprenant en outre un module de reconnaissance d'images et étant utilisé pour exécuter le procédé selon une des revendications 12 à 15.

200

100

β

300

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180373959 A1